# EUROPÄISCHE PATENTSCHRIFT

(11) **EP 0 475 335 B1**
(45) Veröffentlichungstag und Bekanntmachung des Hinweises auf die Patenterteilung: **18.11.1993**
(21) Anmeldenummer: 91115225.4
(22) Anmeldetag: 09.09.1991
(51) Int. Cl.: F16D 66/02

(54) **Anordnung eines Verschleissmelders in der Backe einer Scheibenbremse**
Arrangement of a wear detector in a brake pad of a disc brake
Arrangement d'un indicateur d'usure dans une plaquette d'un frein à disque

(30) Priorität: 10.09.1990 DE 9012887 U
(43) Veröffentlichungstag der Anmeldung: 18.03.1992
(73) Patentinhaber: LUCAS INDUSTRIES PUBLIC LIMITED COMPANY, Solihull, West Midlands B91 3TX (GB)
(72) Erfinder: Wagner, Armin, W-6545 Mengerschied (DE)
(74) Vertreter: Goetz, Rupert, Dipl.-Ing.

(56) Entgegenhaltungen:
- DE-A- 3 508 268
- DE-B- 2 827 035
- GB-A- 2 161 557

## Beschreibung

Die Erfindung betrifft eine Bremsbackenanordnung für Scheibenbremsen, mit
- einer Stützplatte, die einen Reibbelag trägt und einen radial äußeren Rand sowie einen an diesen angrenzenden belagfreien Bereich aufweist,
- einer Niederhaltefeder, die mittels eines an ihr ausgebildeten, wendelförmigen Halteteils am belagfreien Bereich der Stützplatte um eine zur Drehachse der Bremsscheibe parallele Achse schwenkbar gelagert ist und zwei vom Halteteil ausgehende Schenkel zum Abstützen an einem Bremssattel aufweist, und
- einem Fühler, der an einem am belagfreien Bereich befestigten Tragkörper angeordnet und an eine Warneinrichtung zum Anzeigen von Belagverschleiß anschließbar ist.

Bei bekannten Anordnungen dieser Gattung (DE-C-2813244) weist der belagfreie Bereich der Stützplatte ein durchgehendes Loch auf, in den ein Hohlniet eingenietet ist. Auf dem Hohlniet ist eine Niederhaltefeder mit einem an ihr wendelförmig ausgebildeten Mittelteil schwenkbar gelagert. In den Hohlniet ist ein propfenartiger Tragkörper eingesetzt, von dem aus sich ein Fühler mit einer Kröpfung und dann radial in den zugehörigen Bremsbelag hineinerstreckt. Der Fühler enthält einen normalerweise isolierten Metalldraht, der erst bei fortgeschrittenem Belagverschleiß von der Bremsscheibe freigelegt und unmittelbar berührt wird, so daß sich ein Überwachungsstromkreis über die Bremsscheibe und den Fühler schließt, wodurch ein Warnsignal ausgelöst wird.

Diese bekannte Bremsbackenanordnung hat sich in großer Serie außerordentlich gut bewährt. Schwierigkeiten macht jedoch das nachträgliche Anbringen eines Fühlers an solche Bremsbacken, die ohne Fühler in eine Scheibenbremse mit einer verhältnismäßig kleinen Inspektionsöffnung eingebaut worden sind. Ein Bedürfnis, Scheibenbremsen, die als solche fertigmontiert sind, nachträglich mit einem Fühler für eine Belagverschleiß-Warneinrichtung auszurüsten, kann während oder im Vorfeld der Endmontage von Kraftfahrzeugen auftreten, bei denen je nach Kundenauftrag entweder keine Bremsbacke oder eine mehr oder wenige große Anzahl der Bremsbacken, beispielsweise sämtliche Bremsbacken beider Vorderradbremsen, an eine Warneinrichtung zum Anzeigen fortgeschrittenen Belagverschleisses angeschlossen werden sollen.

Der Erfindung liegt deshalb die Aufgabe zugrunde, eine Bremsbackenanordnung derart zu gestalten, daß sie auch noch nach ihrem Einbau in eine Scheibenbremse auf einfache Weise mit einem Fühler für eine Belagverschleiß-Warneinrichtung ausgerüstet werden kann.

Die Aufgabe ist erfindungsgemäß ausgehend von einer Bremsbackenanordnung der eingangs beschriebenen Gattung dadurch gelöst, daß der Tragkörper radial auf den belagfreien Bereich aufgesteckt und, bezogen auf die Längsrichtung des radial äußeren Randes der Stützplatte, neben dem wendelförmigen Halteteil der Niederhaltefeder angeordnet ist.

Die Erfindung macht sich die Tatsache zunutze, daß so gut wie alle in der Praxis gebräuchlichen Scheibenbremsen einen Sattel mit einer Inspektionsöffnung aufweisen, durch die hindurch der Abnutzungszustand der Bremsbacken zu beobachten ist. Bei den meisten Bremsen sind diese Inspektionsöffnungen zwar zu klein, als daß sie ein radiales Auswechseln der Bremsbacken ohne Abbau des Bremssattels ermöglichen würden; so gut wie immer sind die Inspektionsöffnungen jedoch größer als übliche Fühler für Belagverschleiß-Warneinrichtungen. Bei der erfindungsgemäßen Bremsbackenanordnung läßt sich der Tragkörper, wie immer der zugehörige Fühler im einzelnen beschaffen sein mag, durch eine solche Inspektionsöffnung hindurch radial auf den belagfreien Bereich der zugehörigen Stützplatte aufstecken, ohne daß dazu auch nur die Niederhaltefeder ausgebaut werden müßte.

Bei einer bevorzugten Ausführungsform der Erfindung weist der belagfreie Bereich zwei Aussparungen auf, nämlich eine erste Aussparung zum Aufnehmen eines Niets, auf dem der Halteteil der Niederhaltefeder gelagert ist, und eine zweite Aussparung, die radial nach außen offen ist, und in die der Tragkörper radial eingerastet ist.

Diese Ausführungsform ist zweckmäßigerweise dadurch weitergebildet, daß der Fühler sich radial vom Tragkörper weg erstreckt und in einem radialen Loch im Reibbelag steckt. Es sind jedoch auch Ausführungsformen der Erfindung möglich, bei der sich der Fühler beispielsweise U-förmig um den Tragkörper herum erstreckt, wie dies an sich aus der DE-C-3233634 bekannt ist.

Bei der Ausgestaltung mit radialem Fühler ist es ferner zweckmäßig, daß ein Schenkel der Niederhaltefeder eine Kröpfung aufweist, die einen Freiraum für den Fühler bildet.

Schließlich ist es vorteilhaft, wenn der Tragkörper zwei Flansche aufweist, die an je einer Seite des belagfreien Bereichs anliegen.

Ein Ausführungsbeispiel der Erfindung wird im folgenden anhand schematischer Zeichnungen mit weiteren Einzelheiten erläutert. Es zeigen:
- Fig. 1: einen Teilschnitt einer Scheibenbremse in der achsnormalen Ebene I-I in Fig. 2;
- Fig. 2: die radiale Draufsicht in Richtung des Pfeils II in Fig. 1; und
- Fig. 3: den Teilschnitt III-III in Fig. 2

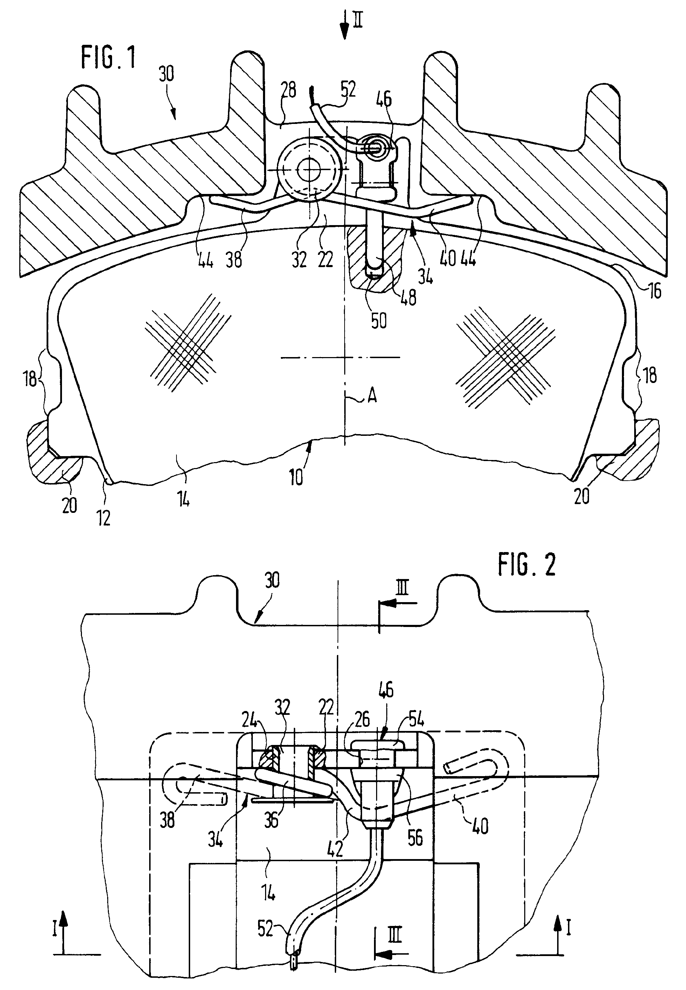

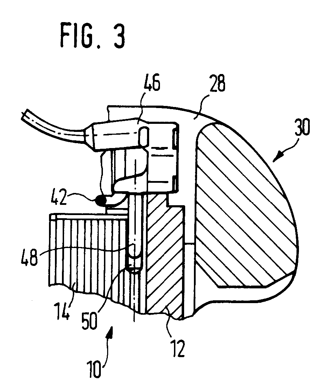

In Fig. 1 bis 3 ist eine Bremsbacke 10 dargestellt, deren Hauptbestandteile eine Stützplatte 12 aus Stahl und ein Reibbelag 14 aus üblichem Reibmaterial sind. Die Stützplatte 12 hat einen kreisbogenförmigen radial äußeren Rand 16, dessen Mittelpunkt auf der Drehachse einer nicht dargestellten Bremsscheibe liegt, sowie ein Paar zueinander paralleler seitlicher Ränder 18, die symmetrisch in bezug auf eine die genannte Drehachse enthaltende Axialebene A angeordnet und an einem Bremsträger 20 abgestützt sind. An der Stützplatte 12 ist ein radial nach außen vorspringender Bereich 22 ausgebildet, der von Reibbelag 14 frei ist und auf einer Seite der Axialebene A eine kreisförmige Aussparung 24 sowie auf der anderen Seite der Axialebene A eine radial nach außen offene, im wesentlichen U-förmige Aussparung 26 aufweist und in eine Inspektionsöffnung 28 eines Bremssattels 30 hineinragt.

In der kreisförmigen Aussparung 24 ist ein zur Drehachse der Bremsscheibe paralleler, hohler Niet 32 befestigt, auf dem eine Niederhaltefeder 34 aus Draht mit einem an ihr ausgebildeten wendelförmigen Halteteil 36 schwenkbar gelagert ist. Vom Halteteil 36 erstrecken sich ein kürzerer Schenkel 38 und ein längerer Schenkel 40 in entgegengesetzten Richtungen weg; der längere Schenkel 40 hat eine in der Draufsicht gemäß Fig. 2 sichtbare Kröpfung 42, so daß er einen an den belagfreien Bereich 22 angrenzenden Raum freiläßt. Die Enden der beiden Schenkel 38 und 40 stützen sich in je einer Vertiefung 44 an der in Fig. 1 unteren Seite des Bremssattels 30 ab.

In die radial nach außen offene Aussparung 26 des belagfreien Bereichs 22 ist radial von außen nach innen, in Fig. 1 also von oben nach unten, ein Tragkörper 46 aus elastischem, elektrisch isolierendem, aber hitzebeständigem Werkstoff eingerastet. Vom Tragkörper 46 erstreckt sich ein Fühler 48 in Gestalt eines elektrisch isolierten Metalldrahts ungefähr radial nach innen, in Fig. 1 senkrecht nach unten, in ein ungefähr radiales Loch 50 des Bremsbelags 14 hinein. In axialer Richtung erstreckt sich vom Tragkörper 48 eine Leitung 52 weg, die mit dem Fühler 48 verbunden und an eine Warneinrichtung üblicher Bauart zum Anzeigen von Belagverschleiß anschließbar ist.

Der Tragkörper 46 weist paarweise angeordnete Flansche 54 und 56 auf, die mit axialer Vorspannung an je einer zur Drehachse der Bremsscheibe und somit auch zur Axialebene A normalen Außenseite des belagfreien Bereichs 22 anliegen, wodurch Tragkörper 46 und Fühler 48 rüttelsicher an der Bremsbacke 10 befestigt sind.

## Patentansprüche

1. Bremsbackenanordnung für Scheibenbremsen, mit
- einer Stützplatte (12), die einen Reibbelag (14) trägt und einen radial äußeren Rand (16) sowie einen an diesen angrenzenden belagfreien Bereich (22) aufweist,
- einer Niederhaltefeder (34), die mittels eines an ihr ausgebildeten, wendelförmigen Halteteils (36) am belagfreien Bereich (22) der Stützplatte (12) um eine zur Drehachse der Bremsscheibe parallele Achse schwenkbar gelagert ist und zwei vom Halteteil (36) ausgehende Schenkel (38, 40) zum Abstützen an einem Bremssattel (30) aufweist, und
- einem Fühler (48), der an einem am belagfreien Bereich (22) befestigten Tragkörper (46) angeordnet und an eine Warneinrichtung zum Anzeigen von Belagverschleiß anschließbar ist,
dadurch **gekennzeichnet**, daß der Tragkörper (46) radial auf den belagfreien Bereich (22) aufgesteckt und, bezogen auf die Längsrichtung des radial äußeren Randes (16) der Stützplatte (12), neben dem wendelförmigen Halteteil (36) der Niederhaltefeder (34) angeordnet ist.

2. Bremsbackenanordnung nach Anspruch 1,
dadurch **gekennzeichnet**, daß der belagfreie Bereich (22) zwei Aussparungen (24, 26) aufweist, eine erste Aussparung (24) zum Aufnehmen eines Niets (32), auf dem der Halteteil (36) der Niederhaltefeder (34) gelagert ist, und eine zweite Aussparung (26), die radial nach außen offen ist, und in die der Tragkörper (46) radial eingerastet ist.

3. Bremsbackenanordnung nach Anspruch 2,
dadurch **gekennzeichnet,** daß der Fühler (48) sich radial vom Tragkörper (46) weg erstreckt und in einem radialen Loch (50) im Reibbelag (14) steckt.

4. Bremsbackenanordnung nach Anspruch 3,
dadurch **gekennzeichnet,** daß ein Schenkel (40) der Niederhaltefeder (34) eine Kröpfung (42) aufweist, die einen Freiraum für den Fühler (48) bildet.

5. Bremsbackenanordnung nach einem der Ansprüche 2 bis 4,
dadurch **gekennzeichnet,** daß der Tragkörper (46) zwei Flansche (54, 56) aufweist, die an je einer Seite des belagfreien Bereichs (22) anliegen.

## Claims

1. A brake pad assembly for disc brakes, comprising
- a backplate (12) which carries a friction lining (14) and has a radially outer edge (16) and an adjacent zone (22) which is free of friction lining,
- a hold-down spring (34) which is supported on the lining-free zone (22), by a helical retainer portion (36) formed in the spring, so as to be rotatable about an axis extending parallel to the axis of the brake disc, the spring further comprising two limbs (38, 40) which start at the retainer portion (36) and serve for support on a brake caliper (30), and
- a sensor (48) which is mounted on a carrier member (46) secured to the lining-free zone (22) and which is connectable to an alarm means to indicate wear of the friction lining,
**characterised** in that the carrier member (46) is slipped in radial direction on the lining-free zone (22) and disposed next to the helical retainer portion (36) of the hold-down spring (34), with reference to the longitudinal direction of the radially outer edge (16) of the backplate (12).

2. The brake pad assembly as claimed in claim 1,
characterized in that the lining-free zone (22) includes two recesses (24, 26), a first one (24) to receive a rivet (32) on which the retainer portion (36) of the hold-down spring (34) is supported, and a second one (26) which is open in radial outward direction and in which the carrier member (46) is fitted radially in snap engagement.

3. The brake pad assembly as claimed in claim 2,
characterized in that the sensor (48) extends radially away from the carrier member (46) and sits in a radial aperture (50) formed in the friction lining (14).

4. The brake pad assembly as claimed in claim 3,
characterized in that one limb (40) of the hold-down spring (34) is formed with an elbow (42) which defines free space for the sensor (48).

5. The brake pad assembly as claimed in any one of claims 2 to 4,
characterized in that the carrier member (46) includes two flanges (54, 56) which each abut against a respective side of the lining-free zone (22).

## Revendications

1. Agencement de mâchoires de frein pour freins à disque, comportant
- une plaque d'appui (12) qui porte une garniture de friction (14) et un bord (16) radialement extérieur ainsi qu'une zone (22) sans garniture, adjacente à celui-ci,
- un ressort presseur (34) qui est monté pivotant au moyen d'une pièce de maintien (36) en spirale, formée sur celui-ci, sur la zone (22) sans garniture de la plaque d'appui (12), autour d'un axe parallèle à l'axe de rotation du disque de frein et présente deux branches (38, 40), partant de la pièce de maintien (36), prenant appui contre un étrier de frein (30), et
- une sonde (48), qui est montée sur un corps de support (46), fixé sur la zone (22) sans garniture, et qui peut être raccordée à un dispositif d'alarme indiquant l'usure de la garniture,
caractérisé en ce que le corps de support (46), emboîté radialement sur la zone (22) sans garniture, est placé, par rapport à la direction longitudinale du bord (16) radialement extérieur de la plaque d'appui (12), à côté de la pièce de maintien (36) en spirale du ressort presseur (34).

2. Agencement de mâchoires de frein selon la revendication 1, caractérisé en ce que la zone (22) sans garniture comporte deux découpes (24, 26), une première découpe (24) pour loger un rivet (32), sur lequel est montée la pièce d'appui (36) du ressort presseur (34), et une seconde découpe (26), qui est ouverte radialement vers l'extérieur et dans laquelle le corps de support (46) est clipsé radialement.

3. Agencement de mâchoires de frein selon la revendication 2, caractérisé en ce que la sonde (48) s'éloigne radialement du corps de support (46) et est enfoncée dans un trou (50) radial pratiqué dans la garniture de friction (14).

4. Agencement de mâchoires de frein selon la revendication 3, caractérisé en ce qu'une branche (40) du ressort presseur (34) présente un coude (42) qui forme un espace libre pour la sonde (48).

5. Agencement de mâchoires de frein selon l'une des revendications 2 à 4, caractérisé en ce que le corps de support (46) comporte deux brides (54, 56) qui s'appliquent chacune sur un côté de la zone (22) sans garniture.
